# EUROPEAN PATENT APPLICATION

(11) **EP 1 380 725 A2**
(43) Date of publication of application: **14.01.2004**
(21) Application number: 03015872.9
(22) Date of filing: 11.07.2003
(51) Int. Cl.: F01D 5/18

(54) **Method of producing and assembling a cooling device inside an axial-flow gas turbine blade, and blade produced using such a method**

(30) Priority: 12.07.2002 IT TO20020607
(71) Applicant: AVIO S.p.A., 10040 Rivalta di Torino (IT)
(72) Inventor: Ciacci, Paolo Lorenzo, 10126 Torino (IT); Coutandin, Daniele, 10137 Torino (IT); Dalle Crode, Domenico, 10148 Torino (IT)
(74) Representative: Cerbaro, Elena, Dr.

(57) **Abstract**

A method of producing and assembling a cooling device (15) inside an axial-flow gas turbine blade (1); the airfoil profile (2) of the blade (1) has an inner surface (9) defining a chamber (8), and is connected to a supporting structure by two opposite end pins (6a, 6b) having respective openings (7a, 7b) for the passage of cooling air and which come out inside the chamber (8); the method provides for forming an insert (16) having a number of holes (22) and defined by a first and at least a second body (17, 18, 19, 20) separate from each other, and each of a size approximating but no larger than that of at least one of the openings (7a, 7b); the bodies (17, 18, 19, 20) are inserted successively through the openings (7a, 7b) in the pins (6a, 6b), and are positioned inside the chamber (8) to direct a relative stream of air through each hole (22) on to the inner surface (9) of the airfoil profile (2).

## Description

The present invention relates to a method of producing and assembling a cooling device inside an axial-flow gas turbine blade, and in particular an adjustable-angle blade of a variable-geometry gas turbine stator, to which the following description refers purely by way of example. As is known, the airfoil profile of such a blade is hinged to the annular platforms defining the gas conduit in the stator, and comprises a tail portion connected in sliding manner to the platforms.

A need is felt to cool this type of blade using a so-called "impingement" method, i.e. whereby a number of streams of air are caused to "strike" the inner surface of the airfoil profile.

This calls for housing inside the airfoil profile an insert extending facing and along the whole of the inner surface of the airfoil profile, and having a number of holes for the passage of respective air jets directed on to the inner surface.

It is an object of the present invention to provide a method of producing and assembling a cooling device inside an axial-flow gas turbine blade, designed to meet the above requirement in a straightforward, low-cost manner.

According to the present invention, there is provided a method of producing and assembling a cooling device inside a blade of an axial-flow gas turbine; the blade comprising an airfoil profile having an inner surface defining a chamber, and two connecting end portions located on opposite sides of said airfoil profile for connection to respective supporting structures forming part of said turbine, and having respective openings for the passage of a cooling fluid and which come out inside said chamber; the method comprising the steps of forming an insert having a number of holes; and positioning said insert inside said chamber so as to face said inner surface and direct a relative stream of said cooling fluid through each said hole on to said inner surface; characterized in that said insert is formed by producing a first and at least a second body separate from each other and each of a size approximating but no larger than that of at least one of said openings; and in that positioning said insert inside said chamber comprises the step of inserting said first and said second body successively through said openings.

The present invention also relates to an axial-flow gas turbine blade.

According to the present invention, there is provided a blade for an axial-flow gas turbine; the blade comprising an airfoil profile having an inner surface defining a chamber; two connecting end portions located on opposite sides of said airfoil profile for connection to respective structures forming part of said turbine, and having respective openings for the passage of a cooling fluid and which come out inside said chamber; and a cooling device comprising an insert having a number of holes and positioned inside said chamber so as to face said inner surface and direct a relative stream of said cooling fluid through each said hole on to said inner surface; characterized in that said insert comprises a first and at least a second body separate from each other and each of a size approximating but no larger than that of at least one of said openings, so as to be insertable through the openings.

A non-limiting embodiment of the invention will be described by way of example with reference to the accompanying drawings, in which:
Figure 1 shows a schematic exploded side view of a preferred embodiment of the method according to the present invention for producing and assembling a cooling device inside a gas turbine blade;
Figures 2 and 3 show a cross section and a cutaway view in perspective respectively of a blade produced in accordance with the Figure 1 method.

Number 1 in the accompanying drawings indicates a blade for a stator (not shown) of an aircraft variable-geometry axial-flow gas turbine (not shown).

Blade 1 comprises an airfoil profile 2 housed, in use, inside an annular gas conduit of the turbine, and in turn comprising a front portion 4 hinged about an axis 5 and by respective opposite pins 6a, 6b to two annular platforms (not shown) of the stator defining the conduit. Pins 6a, 6b are coaxial, are formed in one piece with portion 4, and define respective circular openings 7a, 7b, which are coaxial along axis 5, come out inside a chamber 8 defined by an inner surface 9 of profile 2, are relatively small in diameter with respect to the size of chamber 8, and, in use, permit the passage of a stream of cooling air.

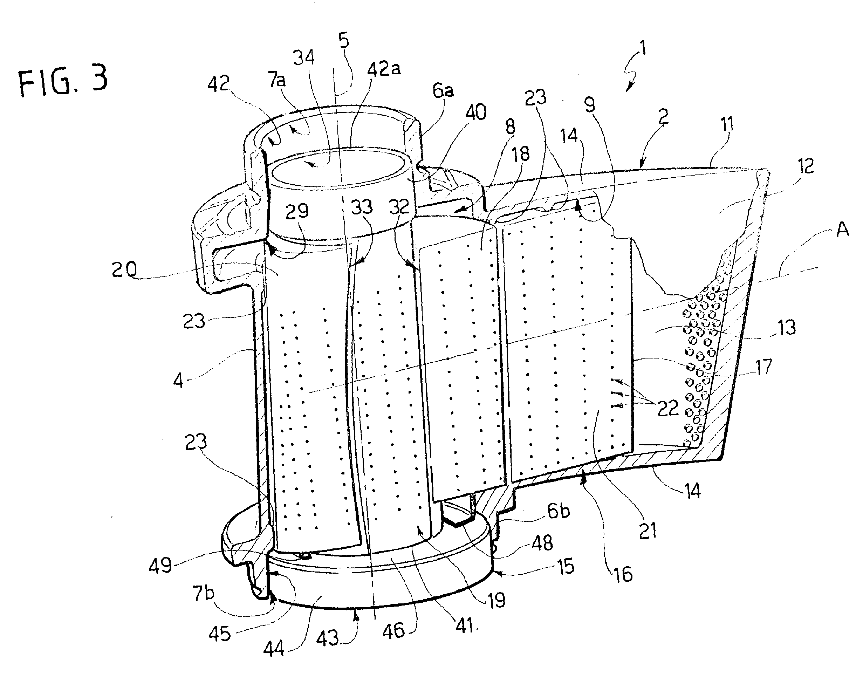

Profile 2 also comprises a tail portion 11, in turn comprising a high-pressure wall 12, a low-pressure wall 13, and two walls 14 located on opposite axial sides of walls 12, 13, and connected in sliding manner, in use, to said platforms (Figure 3).

Blade 1 also comprises a cooling device 15, in turn comprising an assembly 16 of four separate bodies 17, 18, 19, 20 housed inside chamber 8. Each body 17, 18, 19, 20 comprises a relative portion of a lateral wall 21 (Figure 3), which faces surface 9, extends along the whole of surface 9, and has a number of holes 22 (shown schematically) through which respective cooling air jets flow from the centre of chamber 8 on to surface 9.

Bodies 17, 18, 19, 20 are elongated parallel to axis 5, are aligned with one another in a direction A radial with respect to axis 5, and are each of a size, crosswise to axis 5, approximating but no larger than the diameter of at least one of openings 7a, 7b, so as to be insertable axially through openings 7a, 7b.

Bodies 17, 18, 20 are box- or shell-shaped, and rest on relative inner ribs 23 (shown partly) of profile 2, so as to be kept detached from surface 9.

More specifically, body 17 is located inside chamber 8 at the end of portion 11, is substantially wedge-shaped, defines an inner cavity 24, is interposed between walls 14 (Figure 3), and is forced between walls 12, 13 in direction A towards the trailing edge of portion 11.

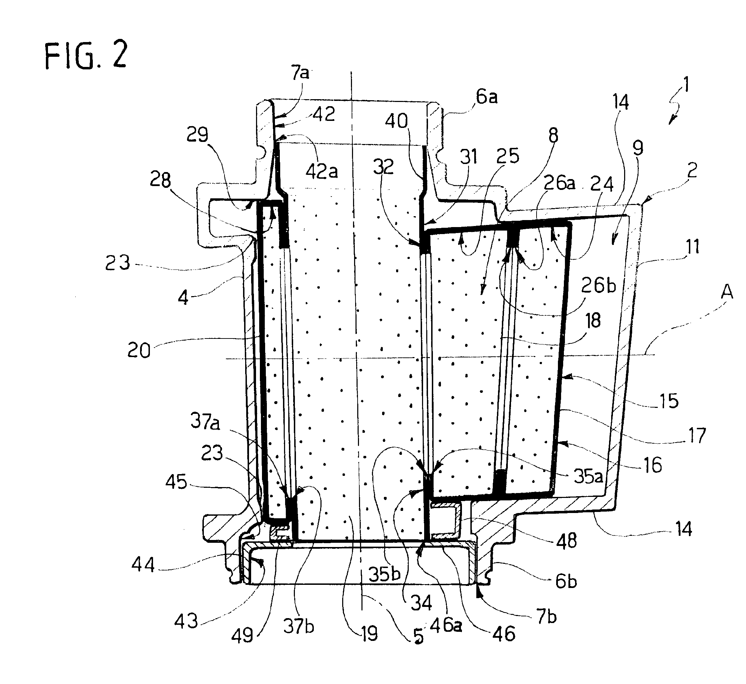

Body 18 is interposed between bodies 17 and 19, rests axially on walls 14, rests on body 17 in direction A, and defines an inner cavity 25 communicating with cavity 24 through two openings 26a, 26b formed in front of each other in respective bodies 17, 18 (Figure 2).

Body 20 is located inside chamber 8 close to the leading edge of portion 4, has a substantially half-moon-shaped cross section, defines an inner cavity 28, and rests axially on an inner shoulder 29 of pin 6a (Figure 2).

As shown in the accompanying drawings, body 19 is tubular, and is bounded by a truncated-cone-shaped outer surface 31 resting, in direction A, on two concave surfaces 32, 33 complementary to surface 31 and bounding respective bodies 18, 20. Body 19 defines an inner channel 34 connecting openings 7a, 7b, and in turn communicating with cavity 25 through two openings 35a, 35b formed in front of each other in respective bodies 18, 19, and with cavity 28 through two openings 37a, 37b formed in front of each other in respective bodies 20, 19.

Body 19 comprises two opposite end portions 40, 41. Portion 40 is housed in opening 7a, rests on the inner surface 42 of pin 6a, and is connected integrally to surface 42 by a brazed joint 42a not shown in detail.

Portion 41, on the other hand, is connected to pin 6b with the interposition of an annular retaining member 43, which forms part of device 15, is housed in opening 7b, and comprises a cylindrical portion 44 connected integrally, preferably brazed, to pin 6b in a manner not shown in detail.

Member 43 also comprises a tab 46, which projects from portion 44, perpendicularly to axis 5, rests axially on portion 41, and is connected integrally to portion 41 by a brazed joint 46a not shown in detail.

With reference to Figure 2, device 15 also comprises two C-section spacers 48, 49, which are interposed axially between tab 46 and respective bodies 18, 20, and are deformed elastically to force bodies 18, 20 elastically and axially towards pin 6a.

Assembly 16 defines an insert or plate, which is externally substantially a negative of the shape of chamber 8, and can be dismantled, i.e. into bodies 17, 18, 19, 20 smaller than, and therefore insertable successively through, openings 7a, 7b.

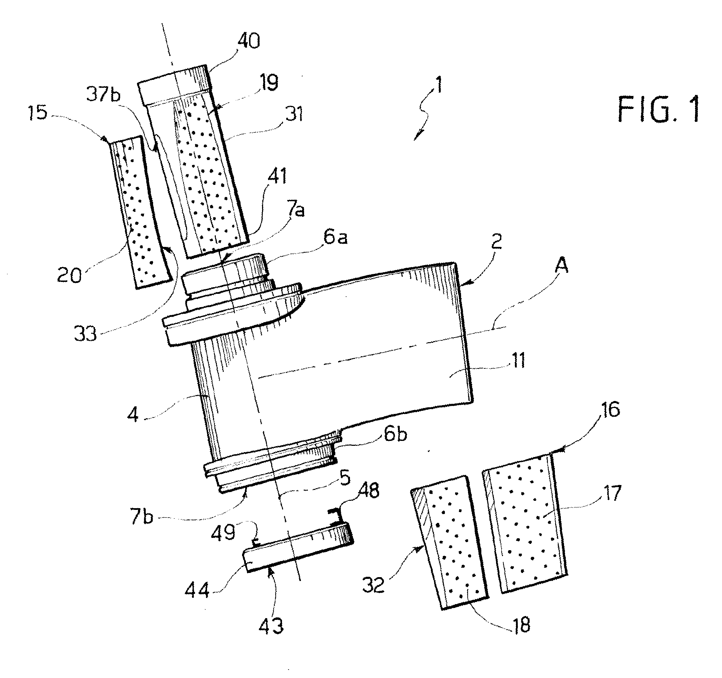

More specifically, with reference to Figure 1, to assemble device 15 inside profile 2, body 17 is first inserted through opening 7b and pushed to the end of the chamber towards the trailing edge of portion 11.

Body 18 is then inserted through opening 7b into chamber 8 and positioned adjacent to body 17 in direction A; body 20 is inserted through opening 7a to rest on portion 4 in direction A; and finally, body 19 is inserted, and, as it moves along axis 5, forces bodies 17, 18, 20 in direction A by virtue of the taper of surface 31.

Once body 19 is inserted axially, portion 40 is brazed to pin 6a, and portion 41 is fixed to pin 6b by attaching member 43 and interposing spacers 48, 49 between member 43 and bodies 18, 20.

When positioning and fixing member 43 to body 19 and pin 6b, spacers 48, 49 are deformed elastically to force bodies 18, 20 axially towards pin 6a (Figure 2).

The method described therefore provides for inserting a cooling insert or plate easily inside profile 2, even when the openings 7a, 7b in the connecting end portions of blade 1 are relatively small, by the insert or plate being dismantled into a number of separate parts (four in the example described).

Device 15 is also relatively easy to assemble and fix to profile 2, by only body 19 being connected integrally to pins 6a, 6b, and by bodies 18, 19, 20 being locked automatically inside chamber 8 by body 19 and member 43.

Clearly, changes may be made to the method described with reference to the accompanying drawings, without, however, departing from the scope of the present invention.

In particular, dismantling the insert or plate into at least two separate successively inserted bodies also applies advantageously to other types of blades having relatively small access openings with respect to the transverse dimensions of the inner chamber of the airfoil profile.

## Claims

1. A method of producing and assembling a cooling device (15) inside a blade (1) of an axial-flow gas turbine; the blade comprising an airfoil profile (2) having an inner surface (9) defining a chamber (8), and two connecting end portions (6a, 6b) located on opposite sides of said airfoil profile (2) for connection to respective supporting structures forming part of said turbine, and having respective openings (7a, 7b) for the passage of a cooling fluid and which come out inside said chamber (8); the method comprising the steps of forming an insert (16) having a number of holes (22); and positioning said insert (16) inside said chamber (8) so as to face said inner surface (9) and direct a relative stream of said cooling fluid through each said hole (22) on to said inner surface (9); **characterized in that** said insert (16) is formed by producing a first (17, 18, 20) and at least a second (19) body separate from each other and each of a size approximating but no larger than that of at least one of said openings (7a, 7b); and **in that** positioning said insert (16) inside said chamber (8) comprises the step of inserting said first (17, 18, 20) and said second (19) body successively through said openings (7a, 7b).

2. A method as claimed in Claim 1, **characterized in that** positioning said insert (16) inside said chamber (8) comprises the further step of fitting said first (17, 18, 20) and said second (19) body resting against each other inside said chamber (8) in a direction (A) crosswise to an insertion axis (5) through said openings (7a, 7b).

3. A method as claimed in Claim 2, **characterized in that** the step of fitting said first (17, 18, 20) and said second (19) body resting against each other is effected by forcing said first body (17, 18, 20) in said direction (A).

4. A method as claimed in Claim 3, **characterized in that** said first body (17, 18, 20) is forced by moving said second body (19) along said insertion axis (5).

5. A method as claimed in Claim 3 or 4, **characterized by** comprising the further step of at least axially locking said second body (19) with respect to said airfoil profile (2) after forcing said first body (17, 18, 20).

6. A method as claimed in Claim 5, **characterized in that** said second body (19) is locked by brazing to at least one of said end portions (6a, 6b).

7. A method as claimed in Claim 5 or 6, **characterized in that** said second body (19) is locked by interposing a retaining member (43) between said second body (19) and one (6b) of said end portions, and by connecting said retaining member (43) integrally to the end portion (6b).

8. A method as claimed in Claim 7, **characterized by** comprising the further step of forcing said first body (18, 20) inside said chamber (8) in a direction parallel to said insertion axis (5).

9. A method as claimed in Claim 8, **characterized in that** said first body (18, 20) is forced by axially interposing elastic means (48, 49) between said retaining member (43) and said first body (18, 20), and by preloading said elastic means (48, 49).

10. A method as claimed in Claim 9, **characterized in that** said elastic means (48, 49) are preloaded when connecting said retaining member (43) to the relative said end portion (6b).

11. A method as claimed in any one of the foregoing Claims, **characterized in that** said first and said second body (17, 18, 19, 20) are formed with respective inner cavities (24, 25, 28, 34) which communicate with one another after insertion of the bodies inside said chamber (8).

12. A method as claimed in any one of the foregoing Claims, **characterized by** forming said insert (16) to obtain at least a third body (20), and positioning said second body (19) inside said chamber (8) in an intermediate position between said first (17, 18) and said third (20) body.

13. A blade (1) for an axial-flow gas turbine; the blade comprising an airfoil profile (2) having an inner surface (9) defining a chamber (8); two connecting end portions (6a, 6b) located on opposite sides of said airfoil profile (2) for connection to respective structures forming part of said turbine, and having respective openings (7a, 7b) for the passage of a cooling fluid and which come out inside said chamber (8); and a cooling device (15) comprising an insert (16) having a number of holes (22) and positioned inside said chamber (8) so as to face said inner surface (9) and direct a relative stream of said cooling fluid through each said hole (22) on to said inner surface (9); **characterized in that** said insert (16) comprises a first and at least a second body (17, 18, 19, 20) separate from each other and each of a size approximating but no larger than that of at least one of said openings (7a, 7b), so as to be insertable through the openings (7a, 7b).

14. A blade as claimed in Claim 13, **characterized in that** said first and said second body (17, 18, 19, 20) are fitted resting against each other inside said chamber (8) in a direction (A) crosswise to an insertion axis (5) through said openings (7a, 7b).

15. A blade as claimed in Claim 14, **characterized in that** said cooling device (15) comprises first forcing means (31, 32, 33) for forcing said first body (17, 18, 20) in said direction (A).

16. A blade as claimed in Claim 15, **characterized in that** said first forcing means (31, 32, 33) comprise a wedge connection, between said first (17, 18, 20) and said second (19) body, comprising two mating surfaces (31, 32, 33) sloping with respect to said axis (5).

17. A blade as claimed in Claim 15 or 16, **characterized by** comprising locking means (42a, 43) for at least axially locking said second body (19) with respect to said airfoil profile (2).

18. A blade as claimed in Claim 17, **characterized in that** said locking means comprise a brazed joint (42a) connecting said second body (19) to at least one of said end portions (6a, 6b).

19. A blade as claimed in Claim 17 or 18, **characterized in that** said locking means comprise a retaining member (43) interposed between said second body (19) and one of said end portions (6b), and connected integrally to the end portion (6b).

20. A blade as claimed in Claim 19, **characterized in that** said cooling device (15) comprises second forcing means (43, 48, 49) for forcing said first body (18, 20) inside said chamber (8) in a direction parallel to said axis (5).

21. A blade as claimed in Claim 20, **characterized in that** said second forcing means (43, 48, 49) comprise preloaded elastic means (48, 49) interposed between said retaining member (43) and said first body (18, 20).

22. A blade as claimed in any one of Claims 13 to 21, **characterized in that** said insert (16) comprises at least a third body (20); said second body (19) being interposed between said first (18) and said third (20) body.

23. A blade as claimed in any one of Claims 13 to 21, **characterized in that** said end portions are defined by respective pins (6a, 6b) hinged to respective supporting structures of said turbine.

24. A blade as claimed in any one of Claims 13 to 22, **characterized in that** said first and said second body (17, 18, 19, 20) define respective inner cavities (24, 25, 28, 34) communicating with each other.
